Europäisches Patentamt

European Patent Office

Office européen des brevets

(11) Publication number: **0 573 015 A1**

# EUROPEAN PATENT APPLICATION

(21) Application number: **93108876.9**

(22) Date of filing: **02.06.93**

(51) Int. Cl.⁵: **C08G 18/64**, C08K 3/36,
C08G 18/58, C08G 18/80

(30) Priority: **03.06.92 JP 142807/92**

(43) Date of publication of application:
**08.12.93 Bulletin 93/49**

(84) Designated Contracting States:
**BE DE GB**

(71) Applicant: **SUMITOMO METAL INDUSTRIES,
LTD.**
**5-33 Kitahama 4-chome**
**Chuo-ku**
**Osaka-shi, Osaka(JP)**
Applicant: **Nippon Paint Co., Ltd.**
**1-2 Oyodokita 2-chome**
**Kita-ku, Osaka-shi, Osaka 531(JP)**
Applicant: **MAZDA MOTOR CORPORATION**
**3-1, Shinchi,**
**Fucho-cho**
**Aki-gun, Hiroshima 735(JP)**

(72) Inventor: **Odawa, Taketosi**
**2-12-11, Sugiyamate**
**Hirakata-shi, Osaka(JP)**
Inventor: **Kimura, Koichi**
**2-6-20, Hirano-Honmachi,**
**Hirano-ku**
**Osaka-shi, Osaka(JP)**
Inventor: **Yamamoto, Hisataka**
**1-18-16-201, Matsubara,**

**Setagaya-ku**
**Tokyo(JP)**
Inventor: **Suzukawa, Yukio**
**1054-5, Misonou,**
**Saijo-cho**
**Higashi-Hiroshima-shi, Hiroshima-ken(JP)**
Inventor: **Okazaki, Ken**
**5-11-10, Hachihonmatsu-Minami 3-chome**
**Higashi-Hiroshima-shi, Hiroshima-ken(JP)**
Inventor: **Hosoda, Yasushi**
**3-25-1-406, Kaminoshima-cho**
**Amagasaki-shi, Hyogo-ken(JP)**
Inventor: **Shiota, Toshiaki**
**2-7-9 Matsugaoka**
**Takatsuki-shi, Osaka(JP)**
Inventor: **Suzuki, Nobukazu**
**1031-8, Kyuchu,**
**Kashima-machi**
**Kashima-gun, Ibaraki-ken(JP)**
Inventor: **Ikeda, Satoshi**
**2380-23, Kyuchu,**
**Kashima-machi**
**Kashima-gun, Ibaraki-ken(JP)**

(74) Representative: **TER MEER - MÜLLER -
STEINMEISTER & PARTNER**
**Mauerkircherstrasse 45**
**D-81679 München (DE)**

(54) **Composite organic-coated steel sheet.**

(57) A composite organic-coated steel sheet suitable for use in automobile bodies comprises a steel sheet plated with zinc or a zinc alloy and having on the plated surface on one or both sides of the steel sheet a lower chromate film and an upper organic resin coating film. The upper organic coating film has a thickness of 0.1 - 5 μm and is formed from a primer composition which comprises, in an organic solvent, (1) 100 parts by weight of an epoxy resin having a number-average molecular weight of from 500 to 10,000, (2) from 10 to 60 parts by weight of an aromatic polyamine containing from 2% to 30% by weight, based on the aromatic polyamine, of a promoter selected from the group consisting of phenol compounds and cresol compounds, (3) from 10 to 60 parts by weight of a polyisocyanate, and (4) from 10 to 40 phr of silica particles of colloidal silica or fumed silica or a mixture of these.

The present invention relates to a composite organic-coated steel sheet suitable for use in automobiles and exhibiting improved weldability, electrodeposition coatability, and press formability as well as excellent corrosion resistance capable of withstanding so-called "contact rust" corrosion caused by contact with a rusty material.

Various types of surface-treated steel sheets have been used in a wide variety of industrial fields including the automobile industry. As the proportion of such steel sheets used increases, the level of properties required for these steel sheets becomes higher. In the automotive industry, for example, surface-treated steel sheets are required to have long-lasting corrosion resistance such as "ten year guarantee against perforation" as well as good electrodeposition coatability and weldability.

Among many types of surface-treated steel sheets which have been proposed for use in automobile bodies, so-called composite organic-coated steel sheets, which comprise a steel sheet plated with zinc or a zinc alloy having on the plated surface a lower chromate film and an upper thin organic coating film formed from an organic resin-based primer, possess significantly improved corrosion resistance due to the anticorrosive effect of the zinc-based plated coating and the chromate film associated with the shielding effect of the organic coating as a barrier to shield from the surrounding environments.

Although composite organic-coated steel sheets can exhibit their prominent corrosion resistance under normal corrosive environments, it has been found that they cannot be prevented from rusting under special corrosive environments. For instance, when a composite organic-coated steel sheet is assembled with a bare cold-rolled steel sheet so as to bring these sheets into direct contact with each other, the rust formed on the bare steel sheet by corrosion adheres to the surface of the composite organic-coated steel sheet. In such cases, severe corrosion similar to "contact rust" observed on stainless steels may occur on the composite organic-coated steel sheet. The mechanism of this phenomenon has not been completely elucidated, but it is thought to result from adsorption of the rust by the organic coating to accelerate penetration of any corrosive substance through the organic coating.

Corrosion of composite organic-coated steel sheets due to "contact rust" has not received adequate investigation. As a measure for preventing such "contact rust" corrosion in a composite organic-coated steel sheet, it is considered to be effective to increase the thickness of the upper organic coating film thereof. However, the thickness of the organic coating film cannot be increased since such an increase is inevitably accompanied by a deterioration in electrodeposition coatability and weldability. The same problem is involved when increasing the crosslink density of the organic coating film to make the coating more rigid.

It is known that the corrosion resistance of a composite organic-coated steel sheet can be further improved by incorporation of fine silica particles such as colloidal silica in the upper organic coating thereof. See Japanese Patent Application Kokai No. 2-134238(1990) and U.S. Patent No. 5,147,729. However, these composite organic-coated steel sheets are not satisfactory with respect to prevention of "contact rust" corrosion.

It is an object of the present invention to provide a composite organic coated steel sheet suitable for use in the manufacture of automobile bodies.

It is another object of the present invention to provide a composite organic-coated steel sheet having well-balanced properties.

It is a further object of the present invention to provide a composite organic-coated steel sheet having a significantly improved corrosion resistance capable of withstanding "contact rust" corrosion while still having good electrodeposition coatability, weldability, and press formability.

The term "good electrodeposition coatability" used herein means that an electrodeposition coating which is free from gas pinholes and which has good surface appearance can be formed on the upper organic coating film.

The present invention provides a composite organic-coated steel sheet comprising a steel sheet plated with zinc or a zinc alloy and having on the plated surface on one side or both sides of the steel sheet a lower chromate film and an upper organic resin coating film, wherein the upper organic coating film has a thickness of 0.1 - 5 $\mu$m and is formed from a primer composition which comprises, in an organic solvent, (1) 100 parts by weight of an epoxy resin having a number-average molecular weight of from 500 to 10,000, (2) from 10 to 60 parts by weight of an aromatic polyamine containing from 2% to 30% by weight, based on the aromatic polyamine, of a promoter selected from the group consisting of phenol compounds and cresol compounds, (3) from 10 to 60 parts by weight of a polyisocyanate, and (4) from 10 to 40 phr of silica particles of colloidal silica or fumed silica or a mixture of these.

The term "phr" is an abbreviation of per hundred resin and is used in the context of the present invention to indicate parts by weight based on 100 parts by weight of total resin solids which are the sum of the solids of epoxy resin component (1), the promoter-containing aromatic polyamine component (2), and the polyisocyanate component (3).

The present inventors investigated various factors which may have an effect on "contact rust" corrosion in a composite organic-coated steel sheet and found the following.

(i) The factors in the lower chromate film (coating weight, types and amounts of additives) have little effect on "contact rust" corrosion.

(ii) Corrosion caused by "contact rust" can be diminished by increasing the thickness of the upper organic coating film.

(iii) When the resistivity of an organic coating film is determined before and after a corrosion test using a corrosive solution containing iron rust, the resistivity significantly decreases after the corrosion test.

On the basis of these findings, it is thought that the "contact rust" corrosion of a composite organic-coated steel sheet originates from deposition of iron rust on the upper organic coating film and the portions of the organic coating film on which iron rust is deposited are attacked by corrosive factors such as water, oxygen, and chlorides, resulting in deterioration by expansion or blistering of the organic coating film and causing corrosion. This indicates that the "contact rust" corrosion is largely governed by the properties of the upper organic coating film and that in order to prevent such corrosion, it is important to modify the organic film.

It has been found that an organic coating film formed from an epoxy resin-based primer composition comprising (1) an epoxy resin, (2) a promoter-containing aromatic polyamine, (3) a polyisocyanate, and (4) colloidal silica and/or fumed silica is highly effective for prevention of "contact rust" corrosion and at the same time exhibits good weldability, press formability, and electrodeposition coatability.

The composite organic-coated steel sheet of the present invention is characterized in that the upper organic resin coating film is formed from such an epoxy resin-based primer composition with a thickness of 0.1 to 5 $\mu$m. The underlying chromate film and the base zinc-plated steel sheet may be the same as employed in conventional composite organic-coated steel sheets.

In the following description, all the parts and percents are by weight unless otherwise indicated.

Zinc-plated steel sheet:

The base material in a composite organic-coated steel sheet is usually a zinc-plated steel sheet, i.e., a steel sheet plated with pure zinc or a zinc-based alloy. The zinc or zinc-based alloy plated coating may be formed by electroplating, hot dipping (galvanizing), alloyed galvanizing, or vacuum deposition plating on one or both sides of a substrate steel sheet.

The type of the substrate steel sheet is not critical. However, when the composite organic-coated steel sheet is intended for use in automobiles, it is advantageous that the substrate steel sheet be of the bake-hardening type, which is designed to undergo hardening during baking of a finish coating, which is normally applied, in the manufacture of automobile bodies, after press forming and assembling. A bake-hardening steel sheet can provide automobile bodies with a significantly enhanced strength by hardening in the finish coating stage without interfering with the preceding press forming stage.

The coating weight of the zinc or zinc alloy plating is not critical, but it is preferably in the range of from 10 to 60 g/m$^2$ for one surface in view of a balance between press formability and corrosion resistance. The plated coating may be a multilayer coating, e.g., consisting of a lower zinc or zinc alloy layer and an upper thin layer of a metal other than zinc (such as iron or nickel) formed by the so-called flash plating.

Lower chromate film:

The lower chromate film can be formed on the zinc-plated coating by use of a chromating solution of the coating, conversion, or electrolysis type. Particularly, a chromating solution of the coating type is preferred since it gives a chromate film having a particularly improved corrosion resistance.

A chromating solution of the coating type, when applied to a substrate and baked, forms a chromate film by reduction of chromic acid and evaporation of water. In order to accelerate the reduction and film formation by baking at a relatively low temperature, it is advantageous to employ a two-stage reduction method in which the chromic acid present in the solution is partly reduced prior to application so as to decrease the amount of chromic acid to be reduced during baking.

The coating weight of the chromate film is usually in the range of from 5 to 200 mg/m$^2$ and preferably from 30 to 120 mg/m$^2$ as Cr metal.

Upper organic coating film:

The upper organic coating film is formed from an epoxy resin-based primer composition comprising (1) an epoxy resin, (2) a promoter-containing aromatic polyamine, (3) a polyisocyanate, (4) colloidal silica and/or fumed silica, and (5) one or more organic solvents.

(1) Epoxy resin:

The epoxy resin constitutes a main vehicle of the primer composition used in the preesnt invention. Epoxy resins known in the art include various classes including glycidyl ethers, glycidyl esters, glycidyl amines, and linear aliphatic or alicyclic epoxides. Any of these epoxy resins can be used in the present invention. In addition, a variety of modified epoxy resins such as acrylate-modified and urethane-modified epoxy resins are also useful in the invention.

Preferably, the epoxy resin is of the glycidyl ether type such as bisphenol or novolak epoxy resins. The bisphenol epoxy resins can be prepared by reacting a bisphenol compound with an epihalohydrin such as epichlorohydrin. The bisphenol compound useful in this reaction includes bisphenol A [= 2,2-bis(4-hydroxyphenyl)propane], bisphenol F (= 4,4'dihydroxydiphenylmethane), and bisphenol S (= 4,4'-dihydroxydiphenylsulfone), and brominated or fluorinated derivatives of these compounds. The novolak epoxy resins include phenol novolak resins and cresol novolak resins, both of which can be used in the invention.

The epoxy resin useful in the invention has a number-average molecular weight in the range of from 500 to 10,000 and preferably from 1,000 to 5,000. When the number average molecular weight of the epoxy resin is less than 500, a crosslinking reaction does not proceed sufficiently to increase the molecular weight of the resin to a desired level during baking of a wet film formed from the primer composition, thereby deteriorating the corrosion resistance of the resulting cured organic coating film. An epoxy resin having a number-average molecular weight of more than 10,000 results in the formation of an organic coating film having an extremely high hardness, leading to a degradation in press formability, and it may also result in a degradation in corrosion resistance due to a loss of crosslink density.

(2) Promoter-containing aromatic polyamine:

The aromatic polyamine component serves as a curing agent for the epoxy resin. Any aromatic compound having two or more primary or secondary amine groups can be used in the invention. Examples of suitable aromatic polyamines include m-phenylenediamine (MPDA), 4,4'-diaminodiphenylmethane (DDM), m-xylylenediamine (MXDA), 4,4'-diaminodiphenylsulfone (DDS), and 4-chloro-phenylenediamine (MOCA).

The aromatic polyamine is used in conjunction with a promoter for the following reason. The composite organic-coated steel sheet of the present invention is primarily used in the manufacture of automobile bodies. In such application, a bake-hardening steel sheet is often used as the steel substrate as described previously.

When the steel substrate is a bake-hardening steel sheet, the temperature at which any wet primer film is baked is frequently limited to about 150 °C at highest such that the bake-hardenability of the substrate steel sheet is not inhibited by premature hardening during baking of the primer film. However, since the reactivity of an aromatic polyamine is not so high due to steric hindrance of the amino groups on an aromatic ring, an extremely prolonged baking time is required to bake a wet film of the primer composition at such a limited temperature, thereby greatly diminishing the practical value of the composition.

In order to avoid such a delay in curing by baking at a relatively low temperature, a promoter selected from phenol compounds and cresol compounds is used along with the aromatic polyamine. Useful promoters include such phenol compounds as nonylphenol, salicylic acid, and m-hydroxybenzoic acid as well as such cresol compounds as cresol.

The promoter-containing aromatic polyamine component is used in an amount of from 10 to 60 parts and preferably from 20 parts to 45 parts per 100 parts of the epoxy resin component. When the amount of the aromatic polyamine component (aromatic polyamine + promoter) is less than 10 parts, the resulting primer composition forms a cured organic coating film having a decreased crosslink density, thereby deteriorating the corrosion resistance. Addition of the aromatic polyamine component in excess of 60 parts also results in a decrease in corrosion resistance since unreacted curing agent having free amino groups remains in a cured organic coating film in an increased proportion.

The phenol and/or cresol compound as a promoter is used along with the aromatic polyamine in an amount of from 2% to 30% and preferably from 5% to 25% based on the weight of the aromatic polyamine compound. When the amount is less than 2%, the phenol and/or cresol compound cannot produce a sufficient promoting effect on crosslinking of the epoxy resin, thereby making it difficult to form a cured organic coating film having good corrosion resistance. Addition of more than 30% of the promoter to the aromatic polyamine causes curing of the epoxy resin to proceed excessively, resulting in the formation of an extremely hard cured organic coating film, which deteriorates not only the press formability but also the mechanical properties such as flexural and tensile properties to such a degree that the resulting coated steel sheet no longer withstands stresses applied in practical applications.

(3) Polyisocyanate:

The polyisocyanate also functions as a curing agent. Thus, two classes of curing agents, an aromatic polyamine and a polyisocyanate, are used together in the primer composition. As a result, silica particles can be present in the primer composition as a stable dispersion and the composition can form a cured organic coating film which exhibits improved corrosion resistance and electrodeposition coatability. In the absence of either one of the curing agents, i.e., either the aromatic polyamine or the polyisocyanate, the stability of dispersed silica particles in the primer composition as well as corrosion resistance and electrodeposition coatability of a cured organic coating film are degraded.

The polyisocyanate component is also present in the primer composition in an amount of from 10 to 60 parts and preferably from 20 to 45 parts per 100 parts of the epoxy resin component. When the amount of the polyisocyanate is within this range, improvements in the stability of dispersed silica particles and in the corrosion resistance and electrodeposition coatability of a cured organic coating film become significant. In contrast, these properties are degraded by addition of the polyisocyanate in an amount of either less than 10 parts or more than 60 parts.

Examples of suitable polyisocyanates which can be used in the present invention include aliphatic or alicyclic diisocyanates such as hexamethylene diisocyanate, isophorone diisocyanate, and hydrogenated diphenylmethane diisocyanate; aromatic diisocyanates such as tolylene diisocyanate and diphenylmethane-4,4'-diisocyanate; triisocyanates such as an adduct of 3 moles of one of the above-named diisocyanates to 1 mole of trimethylolpropane, a trimer of hexamethylene diisocyanate, a trimer of tolylene diisocyanate; and the like.

A polyisocyanate curing agent is often used in a blocked form (called blocked isocyanate) in which the free isocyanate groups have been reacted with a blocking agent. The polyisocyanate component used in the invention may be either of the blocked type or of the non-blocked type, although a blocked type polyisocyanate has the advantage of extending the pot life of the primer composition.

When the polyisocyanate component is used in a blocked form, it should be blocked with a blocking agent having a release-initiating temperature below 160 °C such that the blocking agent can be released by baking of a wet film at a temperature below 160 °C. Examples of such a blocking agent include oxime blocking agents such as methyl ethyl ketoxime and cyclohexane oxime; phenolic blocking agents such as phenol, p-tert-butylphenol, and cresol; and ester blocking agents such as ethyl acetoacetate and methyl acetoacetate.

(4) Silica:

In order to provide a cured organic coating film formed from the primer composition with improved corrosion resistance and electrodeposition coatability, silica particles of colloidal silica, fumed silica, or a mixture of these are added in an amount of from 10 to 40 phr and preferably from 15 to 30 phr such that they are dispersed in the primer composition.

Silica in an amount of less than 10 phr is not sufficient to assure that the organic coating film has a satisfactory level of electrodeposition coatability, while the presence of silica in excess of 40 phr causes a deterioration in corrosion resistance and press formability. The silica particles preferably have an average diameter of primary particles in the range of from 8 to 40 nanometers.

Among the two types of silica, colloidal silica is preferred because it can be dispersed in the primer composition into smaller particles and form a dense siloxane network in a cured organic coating film, thereby contributing to improvement in corrosion resistance. Although fumed silica can be used, it has a higher tendency toward the formation of agglomerates in the primer composition so that the average diameter of fumed silica particles (agglomerated particles) present in the primer composition is greater than that of colloidal silica particles. A mixture of these two types of silica may be used.

The colloidal silica used in the present invention may be in the form of an organosol, hydrosol, or mixed sol. It is preferred to use a colloidal silica which has been treated with an alcohol (a monohydric alcohol, a polyhydric alcohol, or a mixture of these) so as to provide the particles with improved dispersibility.

The fine silica particles undergo dehydration/condensation and similar reactions during baking and form a dense network of siloxane bonds, which serves to form a dense organic coating film and enhance the corrosion resistance of the film.

The above-described components (1) to (4) are essential in the primer composition used to form the upper organic coating film in the present invention. If desired, one or more additional components may be optionally added to the primer composition. Examples of such optional components include (i) an anticorrosive pigment, (ii) a color pigment, (iii) a lubricant, and (iv) other additives.

(i) Anticorrosive pigment:

The composite organic-coated steel sheet of the present invention is well-balanced with respect to various principal properties desired thereof, including press formability, corrosion resistance, electrodeposition coatability, and weldability. When the corrosion resistance is of greater importance, an anticorrosive pigment may be added to the composition. The amount of the anticorrosive pigment, when added, is generally within the range of from 1 to 10 phr.

The anticorrosive pigment is preferably selected from chromate pigments such as strontium chromate, lead chromate, barium chromate, calcium chromate, zinc chromate, and magnesium chromate since they can provide improved corrosion resistance, although other anticorrosive pigments may be employed.

(ii) Color pigment:

One or more color pigments may be added so as to color the upper organic coating film. Such a colored film as the uppermost layer provides the coated steel sheet with an improved aesthetic appearance and makes it easy to distinguish the coated side when the substrate steel is coated with the primer composition on one side. Since the upper organic film is very thin, it may be rather difficult to distinguish the coated side in a moment when the organic film is colorless, thereby causing inconvenience to workers.

The color pigment, when added, should be present in the primer composition in a minor amount sufficient to color the organic coating film. Useful color pigments include the following:

White pigments - titanium dioxide, zinc oxide;
Black pigments - carbon black;
Red pigments - iron oxide, quinacridone red, insoluble azo pigments, azo lake pigments;
Blue pigments - phthalocyanine blue, Prussian blue, ultramarine blue;
Yellow pigments - iron oxide, benzimidazolone yellow.

(iii) Lubricant:

In order to assure that the composite organic-coated steel sheet has good press formability, a lubricant may be present in the primer composition in an amount of from 0.5 to 5 phr and preferably from 1 to 4 phr. The lubricant in an amount of less than 0.5 phr is not sufficient to improve the press formability. Addition of the lubricant in an amount in excess of 5 phr deteriorates the electrodeposition coatability.

Any lubricant can be used in the invention. Examples of suitable lubricants include polyethylene waxes having a molecular weight of 1,000 - 10,000, carboxylate ester waxes, polyalkylene glycol waxes, silicone resins, fluorinated resins, and melamine-cyanurate adducts formed by a reaction of 2,4,6-triamino-1,3,5-triazine (melamine) with 2,4,6-trihydroxy-1,3,5-triazine (cyanuric acid) and/or its tautomer.

(iv) Other additives:

In order to improve one or more properties of the upper organic coating film, the primer composition may further contain one or more other additives conventionally employed in coating compositions, particularly epoxy resin-based coating compositions. Examples of such additives include surface modifiers such as silicones and organic polymers, antisagging agents, dispersants, and thickening agents. Each of these additives may be added normally in an amount of 0.1 to 5 phr.

A primer composition used to form the upper organic coating film can be prepared by admixing the essential components (1) to (4) and optionally one or more additional components in an organic solvent. For this purpose, any mixing device which has conventionally been used in the formulation of coating compositions and which includes a dissolver, ball mill, and sand grinding mill may be employed. The admixing procedure may be performed in a single step or multiple steps.

Any organic solvent which can dissolve the base epoxy resin and which can be evaporated by heating at a temperature below 150 °C can be used in the preparation of the primer composition. Suitable organic solvents include ketones such as cyclohexanone, isop'2horone, and methyl isobutyl ketone, and hydrocarbons such as xylene and toluene. Other various organic solvents including alcohols, ethers, and esters may also be used. The organic solvent may be a mixed solvent consisting of two or more organic solvents. The amount of the organic solvent used is adjusted such that the resulting primer composition has a viscosity suitable for the application technique selected.

The upper organic coating film can be formed by applying the primer composition to the surface of the chromate film formed on a zinc-plated steel sheet by means of a conventional coating device such as a roll coater, a spray coating machine, or a curtain flow coater.

The thickness of the organic coating film is in the range of from 0.1 to 5 $\mu$m and preferably from 0.6 to 1.6 $\mu$m on a dry basis. A coating film having a thickness of less than 0.1 $\mu$m is too thin to improve the corrosion resistance to a satisfactory degree, while a coating film thicker than 5 $\mu$m deteriorates the weldability. However, in those applications where no welding is performed in assembling, the upper organic coating film may have a thickness in excess of 5 $\mu$m.

The wet film of the primer composition is baked at a temperature in the range of 80 - 300 °C for a sufficient time to cure the coated film, thereby providing a composite organic-coated steel sheet according to the present invention. When the steel sheet is of the bake-hardening type, it is preferred to bake the wet film at a temperature below 200 °C and more preferably below 150 °C as discussed previously. Most preferably, the baking temperature is between 130 and 150 °C.

The upper organic coating film formed in this manner is improved in respect to both corrosion resistance and electrodeposition coatability. Such improved properties cannot be obtained when the composition is free from either the aromatic polyamine or the polyisocyanate.

Although the reason for the improved properties is not completely clear, it is estimated that the uniform dispersion of the silica particles in the primer composition is maintained in the presence of the two classes of curing agents throughout the entire length of time until it is applied and cured, thereby forming a cured organic coating film having a dense network of siloxane bonds formed from the silica particles. Such a dense coating has an increased barrier effect on penetration of external corrosive substances through the coating film, leading to improved corrosion resistance. Furthermore, the dense coating film minimizes unevenness of the resistivity of the coating film and prevents passage of a local abnormal current during electrodeposition coating, thereby forming a uniform electrodeposited coating having a good surface appearance.

The following examples are presented to further illustrate the present invention. These examples are to be considered in all respects as illustrative and not restrictive.

EXAMPLES

(1) Substrate steel sheet:

The substrate steel sheet used in this example was a zinc-plated steel sheet which had a Zn-13% Ni alloy electroplated coating with a coating weight of 30 g/m$^2$ on each surface of a 0.7 mm-thick cold-rolled steel sheet. Before use, the zinc-electroplated steel sheet was degreased with a commercially-available alkaline degreasing agent.

(2) Chromate treatment:

A chromate film was formed on the zinc alloy plating on one side of the degreased plated steel sheet by applying a commercially-available chromating solution of the coating type (Surfchrome 92; Nippon Paint) with a bar coater and baking at an HMT (highest metal temperature) of 80 °C for 10 seconds to give a chromate film having a weight of 60 mg/m$^2$ as Cr metal.

(3) Preparation of primer compositions:

Primer compositions having the compositions shown in Table 1 were prepared from an epoxy resin, an aromatic polyamine, a promoter, a polyisocyanate, silica, and optionally a lubricant and/or a pigment selected from the list given below.

The procedure for preparing the primer composition of Example 1 was as follows:

(i) The following components were weighed into a glass bottle and thoroughly stirred with glass beads on a paint shaker to give a silica-dispersed resin solution A which was free from a curing agent.

| | |
|---|---|
| Epikote 1004 (epoxy resin) | 25.0 g |
| Hakusol S-200 (colloidal silica) | 30.8 g |
| Ceridust 3620 (polyethylene wax lubricant) | 0.5 g |
| MC-600 (melamine-cyanurate lubricant) | 0.5 g |
| Cyclohexanone (organic solvent) | 15.0 g |
| Total | 71.8 g |

(ii) To the glass bottle containing the silica-dispersed resin solution A, the following components were further added and the resulting mixture was further stirred. Thereafter, the mixture was filtered through a 200 mesh screen to give a curing agent-containing epoxy resin-based primer composition.

| | |
|---|---|
| m-Phenylenediamine (diamine) containing 1.1 g of nonylphenol (promoter) | 8.6 g |
| Coronate HX (diisocyanate) | 8.8 g |
| Cyclohexanone (organic solvent) | 10.0 g |
| | Total 27.4 g |

When the primer composition contained a pigment (anticorrosive pigment or color pigment), the pigment was added and dispersed along with silica in the silica-dispersed resin solution A.

(4) Components used in the preparation of primer compositions:

The following components were used in the primer compositions prepared in the examples and comparative examples. In the list given below, Mn is the number-average molecular weight and NV is the nonvolatile content (wt%).
(i) Epoxy resins:
    (a) Bisphenol A epoxy resins
        (A) Epikote 828 (Shell Chemical; Mn = 400, NV = 100%)
        (B) Epikote 1001 (Shell Chemical; Mn = 1000, NV = 100%)
        (C) Epikote 1004 (Shell Chemical; Mn = 2000, NV = 100%)
        (D) Epikote 1007 (Shell Chemical; Mn = 4000, NV = 100%)
    (b) Bisphenol F epoxy resin
        (E) Epotote YDF 2004 (Toto Kasei; Mn = 1900, NV = 100%)
    (c) Phenol novolak epoxy resins
        (F) Epiclon N740 (Dai-Nippon Ink and Chemical; Mn = 540, NV = 100%)
        (G) Epiclon N775 (Dai-Nippon Ink and Chemical; Mn = 1000, NV = 100%)
    (d) Cresol novolak epoxy resins
        (H) Epiclon N673 (Dai-Nippon Ink and Chemical; Mn = 900, NV = 100%)
        (I) Epotote YDCN 701 (Toto Kasei; Mn = 1700, NV = 100%)
        (J) Epotote YDCN 704 (Toto Kasei; Mn = 3050, NV = 100%)
    (e) Phenoxy epoxy resin
        (K) Phenotote YP 50 (Toto Kasei; Mn = 11800, NV = 100%)
    Among the above epoxy resins, Epoxy Resins (A) and (K) are comparative components since they have a molecular weight outside the range defined herein (500 - 10,000).
(ii) Aromatic polyamines:
    (A) m-Phenylenediamine (NV = 100%)
    (B) 4,4'-Diaminodiphenylmethane (NV = 100%)
(iii) Promoters:
    (A) Nonylphenol (NV = 100%)
    (B) Salicylic acid (NV = 100%)
(iv) Polyisocyanates:
    (a) Hexamethylene diisocyanate
        (A) Coronate HX (Nippon Polyurethane; NV = 100%)
    (b) Isophorone diisocyanate

(B) Desmodur Z-4370 (Sumitomo Bayer Urethane; NV = 70%)
(c) Isophorone diisocyanate (blocked with methyl ethyl ketoxime)
(C) Desmodur BL-4165 (Sumitomo Bayer Urethane;
NV = 65%, release-initiating temp. = 140 - 160 ° C)
(v) Silica:
(a) Colloidal silica
(A) Hakusol S-200 (Tohaku Naruko; NV = 35%, average diameter of primary particles = 20 nm)
(b) Fumed silica
(B) Aerosil 300 (Nippon Aerosil; NV = 100%, average diameter of primary particles = 8 nm)
(vi) Lubricants:
(a) Polyethylene wax
(A) Ceridust 3620 (Hoechst Japan)
(b) Melamine-cyanurate adduct
(B) MC-600 (Nissan Kagaku)
(vii) Pigments:
(a) Color pigment
(A) Indian red (red iron oxide pigment)
(b) Anticorrosive pigment
(B) Barium chromate

(5) Formation of upper organic coating film:

After the epoxy resin-based primer composition prepared in (3) above was diluted, if necessary, with cyclohexanone to adjust the viscosity to an appropriate level for coating, it was applied on the chromate film formed in (2) above by means of a bar coater so as to give a coating thickness of 1 $\mu$m on a dry basis. The wet film was cured by baking at an HMT of 150 ° C for 20 seconds to give a cured organic coating film as the upper layer of a composite organic-coated steel sheet.

(6) Testing procedures:

The corrosion resistance, electrodeposition coatability, and weldability of the composite organic-coated steel sheet were evaluated by the testing procedures described below. The test results are summarized in Table 2.

(i) Corrosion resistance:

(a) Resistance to "contact rust" corrosion:

A flat intact test specimen of each composite organic-coated steel sheet was subjected to 1000 cycles of an accelerated corrosion test in which each cycle consisted of immersion in a 5% NaCl solution at 40 ° C for 7.5 minutes, exposure to a moist atmosphere (RH = 95%) at 40 ° C for 15 minutes, and drying at 60 ° C for 7.5 minutes. The NaCl solution used in this test contained a large amount of iron rust which had been formed by introducing an uncoated steel sheet into the solution and allowing it to corrode therein. After the corrosion test, the organic-coated surface of the test specimen was visually inspected with respect to the formation of rust. The corrosion resistance was evaluated on the basis of the percent area covered by rust on the surface of the test specimen.

(b) Corrosion resistance after press forming:

Press forming was performed on a test specimen of each composite organic-coated steel sheet by subjecting it to cylindrical deep drawing with a diameter of 50 mm and a depth of 50 mm. The shoulder of the die which was used was ground with a #120 Emery paper before each press forming test. The press-formed test specimen was subjected to 200 cycles of an accelerated corrosion test in which each cycle consisted of spraying with a 5% NaCl solution at 35 ° C for 4 hours, drying at 60 ° C for 2 hours, and exposure to a moist atmosphere (RH = 95%) at 50 ° C for 2 hours. Thereafter, the corrosion resistance was evaluated on the basis of the percent area covered by rust in the deformed portion of the test specimen.

(ii) Electrodeposition coatability

Electrodeposition coating was performed on a test specimen of each composite organic-coated steel sheet using a commercially-available paint for electrodeposition (Power-Top U-50; Nippon Paint) by passing an electric current under such conditions that a 20 $\mu$m-thick coating was electrodeposited on a chromated steel sheet and then baking for 25 minutes at 165 °C to form an electrodeposited coating on the surface of the organic coating film of the test specimen. The electro-deposition coatability was evaluated by visual observation of the appearance of the electrodeposited coating as follows:

◎ : Smooth and excellent surface appearance,
○ : Slightly roughened surface but good appearance,
△ : Significantly roughened surface or craters formed,
X : Many craters formed or incapable of electrodeposition coating.

(iii) Weldability

Two test specimens of each composite organic-coated steel sheet were laid one over the other such that the organic-coated surface of one specimen faced the uncoated surface of the other specimen and were subjected to spot welding using an AC single spot welder with electrodes having a tip diameter of 6 mm under the following conditions: a welding current of 10,000 A, a weld time of 12 cycles, and a welding force of 200 Kg. The weldability was evaluated in the following two ways.

A. Stability of current passage:

After 1000 spots were welded, 100 spots were sampled at random and the number of spots having indentations which were not stable or normal was counted to evaluate the stability of current passage.

B. Diameter of electrodes after continuous spot welding:

After 1000 spots were welded, the tip diameters of the electrodes were measured using a pressure-sensitive paper and evaluated as follows:

○ : Tip diameter < 7.0 mm,
△ : Tip diameter = 7.0 - 8.0 mm,
X : Tip diameter > 8.0 mm.

TABLE 1

| | No. | Primer Composition (parts by weight) | | | | | | |
|---|---|---|---|---|---|---|---|---|
| | | Epoxy | Amine | Promoter | Isocyanate | Silica | Lubricant | Pigment |
| EXAMPLES | 1 | C (100) | A (30) | A (4.5) | A (35) | A (121.3) | A(2), B(2) | — |
| | 2 | C (100) | A (10) | A (1.5) | A (35) | A (121.3) | A(2), B(2) | — |
| | 3 | C (100) | A (50) | A (7.5) | A (35) | A (121.3) | A(2), B(2) | — |
| | 4 | C (100) | A (30) | A (4.5) | A (15) | A (121.3) | A(2), B(2) | — |
| | 5 | C (100) | A (30) | A (4.5) | A (55) | A (121.3) | A(2), B(2) | — |
| | 6 | C (100) | A (30) | A (4.5) | A (35) | A (48.7) | A(2), B(2) | — |
| | 7 | C (100) | A (30) | A (4.5) | A (35) | A (188.8) | A(2), B(2) | — |
| | 8 | B (100) | A (30) | A (4.5) | A (35) | A (121.3) | A(2), B(2) | — |
| | 9 | D (100) | A (30) | A (4.5) | A (35) | A (121.3) | A(2), B(2) | — |
| | 10 | E (100) | A (30) | A (4.5) | A (35) | A (121.3) | A(2), B(2) | — |
| | 11 | F (100) | A (30) | A (4.5) | A (35) | A (121.3) | A(2), B(2) | — |
| | 12 | G (100) | A (30) | A (4.5) | A (35) | A (121.3) | A(2), B(2) | — |
| | 13 | H (100) | A (30) | A (4.5) | A (35) | A (121.3) | A(2), B(2) | — |
| | 14 | I (100) | A (30) | A (4.5) | A (35) | A (121.3) | A(2), B(2) | — |
| | 15 | J (100) | A (30) | A (4.5) | A (35) | A (121.3) | A(2), B(2) | — |
| | 16 | C (100) | B (30) | A (4.5) | A (35) | A (121.3) | A(2), B(2) | — |
| | 17 | C (100) | B (30) | B (4.5) | A (35) | A (121.3) | A(2), B(2) | — |
| | 18 | C (100) | A (30) | A (4.5) | B (50) | A (121.3) | A(2), B(2) | — |
| | 19 | C (100) | A (30) | A (4.5) | C (54) | A (121.3) | A(2), B(2) | — |
| | 20 | C (100) | A (30) | A (4.5) | A (35) | B (42.4) | A(2), B(2) | — |
| | 21 | C (100) | A (30) | A (4.5) | A (35) | A (121.3) | A(2), B(2) | A (5) |
| | 22 | B (100) | A (30) | A (4.5) | A (35) | A (121.3) | A(2), B(2) | B (5) |
| | 23 | C (100) | A (30) | A (4.5) | A (35) | A (121.3) | —, B(2) | — |
| | 24 | C (100) | A (30) | A (4.5) | A (35) | A (121.3) | A(2), — | — |
| | 25 | C (100) | A (30) | A (4.5) | A (35) | A (121.3) | —, — | — |
| COMPARATIVE EXAMPLES | 1 | C (100) | A (8)* | A (1.2) | A (35) | A (121.3) | A(2), B(2) | — |
| | 2 | C (100) | A(60)* | A (9) | A (35) | A (121.3) | A(2), B(2) | — |
| | 3 | C (100) | A (30) | A (0.45)* | A (35) | A (121.3) | A(2), B(2) | — |
| | 4 | C (100) | A (30) | A (12)* | A (35) | A (121.3) | A(2), B(2) | — |
| | 5 | C (100) | A (30) | A (4.5) | A (8)* | A (121.3) | A(2), B(2) | — |
| | 6 | C (100) | A (30) | A (4.5) | A (70)* | A (121.3) | A(2), B(2) | — |
| | 7 | C (100) | A (30) | A (4.5) | A (35) | A (29.1)* | A(2), B(2) | — |
| | 8 | C (100) | A (30) | A (4.5) | A (35) | A (242.5)* | A(2), B(2) | — |
| | 9 | A* (100) | A (30) | A (4.5) | A (35) | A (121.3) | A(2), B(2) | — |
| | 10 | K* (100) | A (30) | A (4.5) | A (35) | A (121.3) | A(2), B(2) | — |
| | 11 | C (100) | A (30) | A (4.5) | — * | A (96.9) | A(2), B(2) | — |
| | 12 | C (100) | — * | — | A (35) | A (96.9) | A(2), B(2) | — |

* Outside the range defined herein.

TABLE 2

| | No. | Corrosion Resistance (% rusted area) | | Electro-deposition coatability | Weldability | | |
|---|---|---|---|---|---|---|---|
| | | Contact rust | Deformed portion | | Stability of current passage | Diameter of tip electrode | Overall Rating |
| EXAMPLES | 1 | 1~2 | 0 | ◎ | 0/100 | ○ | ○ |
| | 2 | 3~4 | 3~4 | ◎ | 0/100 | ○ | ○ |
| | 3 | 0 | 5 | ○ | 1/100 | ○ | ○ |
| | 4 | 1~2 | 0 | ○ | 0/100 | ○ | ○ |
| | 5 | 3~4 | 3~4 | ◎ | 1/100 | ○ | ○ |
| | 6 | 3~4 | 1~2 | ○ | 0/100 | ○ | ○ |
| | 7 | 1~2 | 0 | ◎ | 3/100 | ○~△ | ○~△ |
| | 8 | 3~4 | 3~4 | ◎ | 0/100 | ○ | ○ |
| | 9 | 1~2 | 0 | ◎ | 0/100 | ○ | ○ |
| | 10 | 1~2 | 0 | ◎ | 0/100 | ○ | ○ |
| | 11 | 0 | 0 | ◎ | 0/100 | ○ | ○ |
| | 12 | 0 | 0 | ◎ | 0/100 | ○ | ○ |
| | 13 | 0 | 0 | ◎ | 0/100 | ○ | ○ |
| | 14 | 0 | 0 | ◎ | 0/100 | ○ | ○ |
| | 15 | 0 | 0 | ◎ | 0/100 | ○ | ○ |
| | 16 | 1~2 | 0 | ◎ | 0/100 | ○ | ○ |
| | 17 | 1~2 | 0 | ◎ | 0/100 | ○ | ○ |
| | 18 | 1~2 | 0 | ◎ | 0/100 | ○ | ○ |
| | 19 | 1~2 | 0 | ◎ | 1/100 | ○ | ○ |
| | 20 | 3~4 | 1~2 | ○ | 0/100 | ○ | ○ |
| | 21 | 1~2 | 0 | ◎ | 0/100 | ○ | ○ |
| | 22 | 1~2 | 0 | ○ | 0/100 | ○ | ○ |
| | 23 | 1~2 | 3~5 | ◎ | 0/100 | ○ | ○ |
| | 24 | 1~2 | 3~5 | ◎ | 0/100 | ○ | ○ |
| | 25 | 1~2 | 5~10 | ◎ | 0/100 | ○ | ○ |
| COMPARATIVE EXAMPLES | 1 | 100 | 100 | △ | 0/100 | ○ | ○ |
| | 2 | 20 | 100 | △ | 15/100 | △ | △ |
| | 3 | 100 | 100 | △ | 0/100 | ○ | ○ |
| | 4 | 5 | 100 | △ | 8/100 | △ | △ |
| | 5 | 100 | 100 | △ | 0/100 | ○ | ○ |
| | 6 | 100 | 100 | △ | 4/100 | ○~△ | ○~△ |
| | 7 | 100 | 100 | △ | 0/100 | ○ | ○ |
| | 8 | 90 | 95 | ○ | 33/100 | × | × |
| | 9 | 100 | 100 | ○ | 0/100 | ○ | ○ |
| | 10 | 100 | 95 | △ | 1/100 | ○ | ○ |
| | 11 | 100 | 100 | × | 0/100 | ○ | ○ |
| | 12 | 100 | 100 | △ | 0/100 | ○ | ○ |

As can be seen from Table 2, the composite organic-coated steel sheet according to the present invention were improved with respect to all the properties tested. Namely, they had excellent corrosion resistance capable of withstanding "contact rust" and press forming, and at the same time they exhibited satisfactory electrodeposition coatability, press formability, and weldability. Therefore, these steel sheets are particularly suitable for use in automobile bodies and enable the automobile bodies to have an extended

12

durability. In contrast, when the molecular weight of the base epoxy resin or the proportion of one or more components was outside the range defined herein, at least one of the tested properties was degraded.

It will be appreciated by those skilled in the art that numerous variations and modifications may be made to the invention described above with respect to specific embodiments without departing from the spirit or scope of the invention as broadly described.

## Claims

1. A composite organic-coated steel sheet comprising a steel sheet plated with zinc or a zinc alloy and having on the plated surface on one or both sides of the steel sheet a lower chromate film and an upper organic resin coating film, wherein the upper organic coating film has a thickness of 0.1 - 5 $\mu$m and is formed from a primer composition which comprises, in an organic solvent,
   (1) 100 parts by weight of an epoxy resin having a number-average molecular weight of from 500 to 10,000,
   (2) from 10 to 60 parts by weight of an aromatic polyamine containing from 2% to 30% by weight, based on the aromatic polyamine, of a promoter selected from the group consisting of phenol compounds and cresol compounds,
   (3) from 10 to 60 parts by weight of a polyisocyanate, and
   (4) from 10 to 40 phr of silica particles of colloidal silica or fumed silica or a mixture of these, phr being based on the sum of components (1), (2), and (3).

2. The composite organic-coated steel sheet of Claim 1, wherein the zinc or zinc alloy plating has a coating weight in the range of 10 - 60 g/m$^2$ for one surface.

3. The composite organic-coated steel sheet of Claim 1 or 2, wherein the chromate film has a coating weight in the range of 5 - 200 mg/m$^2$ as Cr metal.

4. The composite organic-coated steel sheet of any one of Claims 1 to 3, wherein the upper organic coating film has a thickness in the range of 0.6 - 1.6 $\mu$m.

5. The composite organic-coated steel sheet of any one of Claims 1 to 4, wherein the epoxy resin is selected from the group consisting of glycidyl ethers, glycidyl esters, glycidylamines, linear aliphatic or alicyclic epoxides, and modified epoxy resins.

6. The composite organic-coated steel sheet of any one of Claims 1 to 5, wherein the isocyanate groups of the polyisocyanate are blocked with a blocking agent having a release-initiating temperature below 160 °C.

7. The composite organic-coated steel sheet of any one of Claims 1 to 6, wherein the organic solvent is selected from the group consisting of ketones, hydrocarbons, alcohols, ethers, and esters.

8. The composite organic-coated steel sheet of any one of Claims 1 to 7, wherein the primer composition further comprises one or more additives selected from the group consisting of anticorrosive pigments, color pigments, lubricants, surface modifiers, antisagging agents, dispersants, and thickening agents.

9. The composite organic-coated steel sheet of Claim 8, wherein the primer composition comprises a pigment selected from an anticorrosive pigment in an amount of 1 to 10 phr, a color pigment sufficient to color the upper organic coating film, and a mixture of these.

10. The composite organic-coated steel sheet of Claim 8 or 9, wherein the primer composition comprises a lubricant in an amount of 0.5 - 5 phr.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 307 996 (NIPPON PAINT/NIPPON STEEL) * page 4, line 1 - page 7, line 32; claims 1-4 * --- | 1,6-10 | C08G18/64 C08K3/36 C08G18/58 C08G18/80 |
| A | US-A-3 321 548 (SATTLER) * column 1, line 66 - column 6, line 63 * --- | 1,5,6 | |
| A | EP-A-0 372 957 (NIHON PARKERIZING/MITSUBISHI) * page 4, line 49 - page 6, line 39; claims * ----- | 1 | |

TECHNICAL FIELDS
SEARCHED (Int. Cl.5 )

C08G
C08K
C09D

The present search report has been drawn up for all claims

| Place of search | Date of completion of the search | Examiner |
|---|---|---|
| THE HAGUE | 25 AUGUST 1993 | BOURGONJE A.F. |